## Europäisches Patentamt
## European Patent Office
## Office européen des brevets

(19)

(11) Publication number: **0 015 076**
**B1**

(12) **EUROPEAN PATENT SPECIFICATION**

(45) Date of publication of patent specification: **20.07.83**

(51) Int. Cl.³: **F 16 H 7/06**

(21) Application number: **80300273.2**

(22) Date of filing: **30.01.80**

(54) Chain and sprocket transmissions.

(30) Priority: **07.02.79 JP 13021/79**

(43) Date of publication of application:
**03.09.80 Bulletin 80/18**

(45) Publication of the grant of the patent:
**20.07.83 Bulletin 83/29**

(84) Designated Contracting States:
**DE FR GB**

(56) References cited:
**FR - A - 2 030 886**
**GB - A - 1 276 128**
**US - A - 3 595 097**
**US - A - 3 630 097**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Kawashima, Yoshinori**
**6-18, Moto-cho**
**Sakado-shi Saitama (JP)**
Inventor: **Hashimoto, Yuji**
**4-33-2, Tagara**
**Nerima-ku Tokyo (JP)**

(74) Representative: **MacFarlane, John Anthony Christopher et al,**
**HASELTINE LAKE & CO. Hazlitt House 28,**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Chain and sprocket transmissions

This invention relates to chain and sprocket transmissions in which chains of any form run over sprockets to transmit drive. The chains can be, for example, roller chains or bush chains.

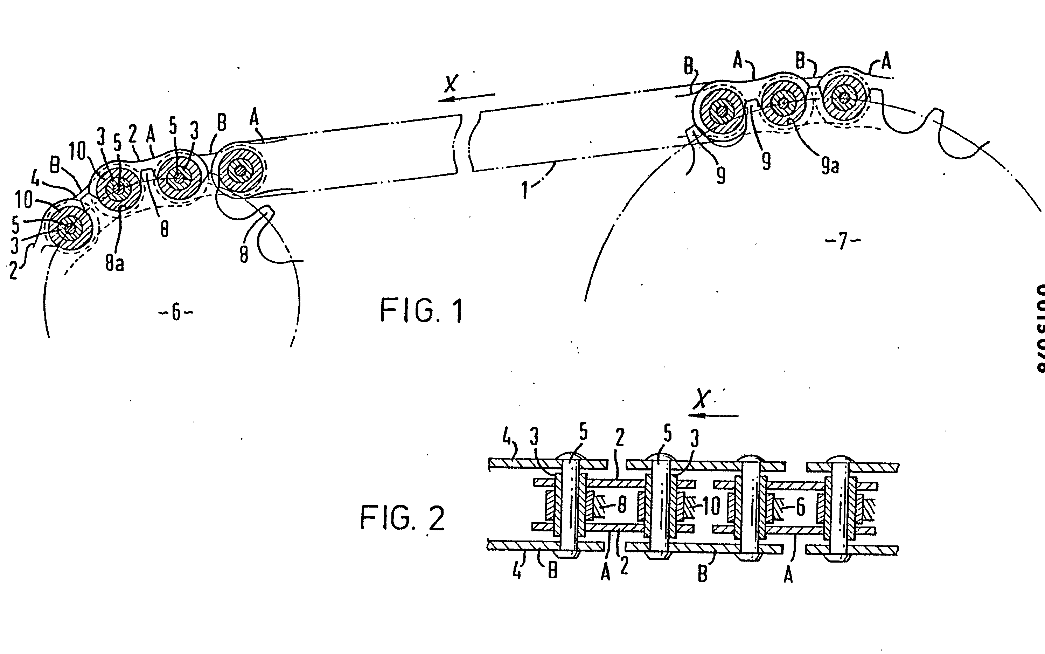

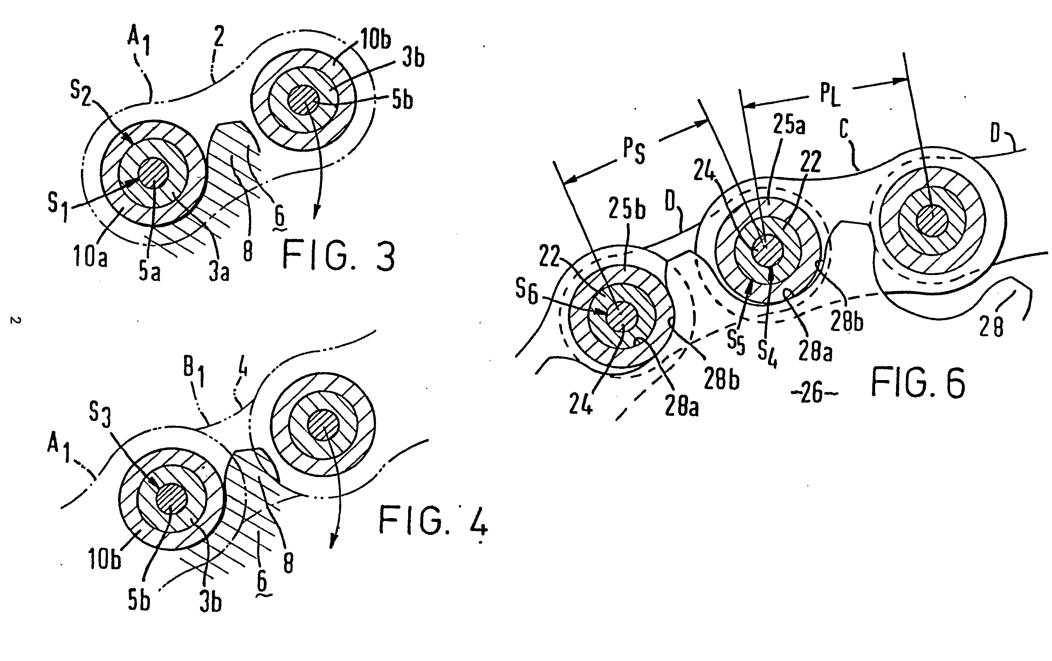

Reference will first be made to Figures 1 to 4 of the accompanying drawings, in which Figures, Figure 1 is a sectional side view showing portions of a chain engaged with sprockets over which the chain runs, Figure 2 is a sectional plan view of part of the chain and one sprocket of Figure 1, and Figures 3 and 4 illustrate motion of the links of the chain around one of the sprockets.

The chain shown in Figures 1 to 4 is a conventional roller chain formed by linking into endless formation inner roller links A alternately with outer pin links B. Each inner roller link A is assembled by attaching a pair of inner link plates 2, 2 to each other by a leading and a trailing bush 3, 3 made fast with the plates. Each outer pin link B is assembled by attaching a pair of outer link plates 4, 4 to each other by a leading and a trailing pin 5, 5, also made fast with the plates. During assembly of these components the bushes 3 are engaged loosely over the pins 5, and rollers 10 for engaging the teeth 8 of the drive sprocket 6 and the teeth 9 of the driven sprocket 7 are engaged over the peripheries of the bushes 3. The assembled roller chain 1 is an equal pitch-length chain in which the inner roller links A and the outer pin links B are equal in length. Furthermore, the tooth flank faces 8a and 9a of the teeth 8 and 9 of the drive and driven sprockets 6 and 7 are formed to be practically of the same curvature as the rollers 10, so that tooth-roller contact is an all-surface contact.

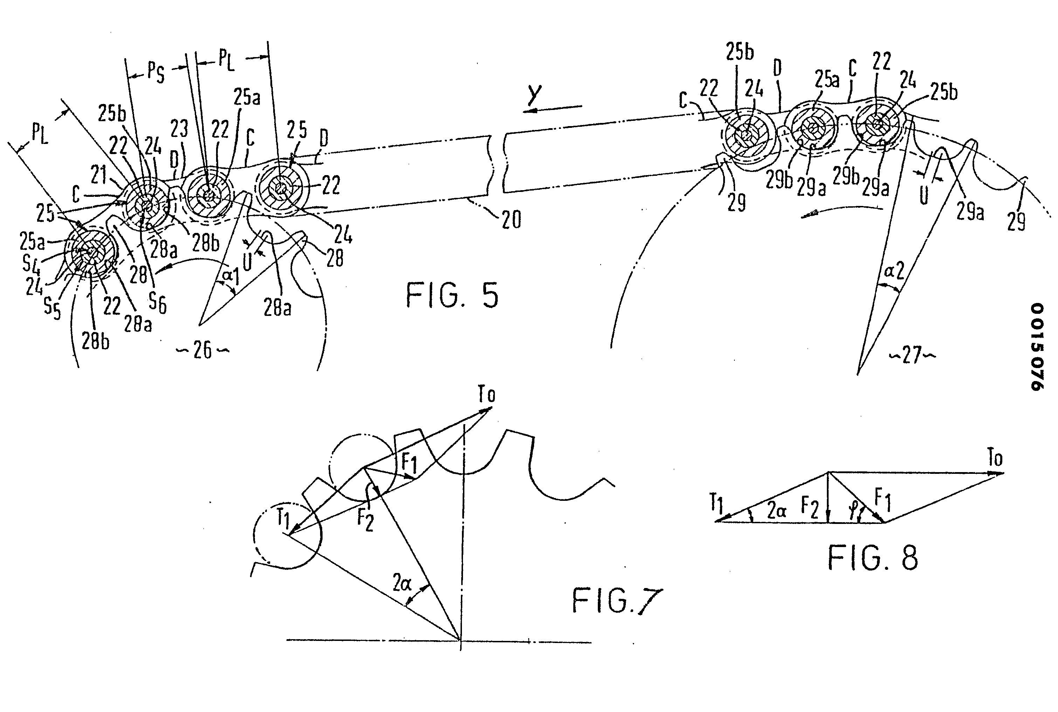

When the roller chain 1 runs around the drive sprocket 6 and the driven sprocket 7, each link A, B turns along the pitch circles of the sprockets, and during this turning movement there is sliding rotation between each pin 5 and its bush 3, and between each bush 3 and its roller 10. This occurs at both the drive and the driven sprocket so that it is sufficient if consideration is now given to the drive sprocket 6, by referring to Figures 3 and 4.

In the situation that one run of the roller chain 1 is running in the direction indicated by arrow X in Figure 1, when a particular inner roller link $A_1$ comes into engagement with the drive sprocket 6 and moves around this sprocket, as shown in Figure 3, the trailing end of this roller link $A_1$ turns downward (in the Figure) about a leading pin 5a as a fulcrum. This can be better appreciated if the sprocket 6 is considered as a stationary system and it will be understood that since the plates 2 of the roller link $A_1$ are fast with the bushes 3, turning of the roller link $A_1$ with respect to the sprocket 6 produces sliding friction at the contact surfaces $S_1$ between the leading pin 5a and the bush 3a thereon, and at the contact surfaces $S_2$ between the bush 3a and the roller 10a thereon. Thus there are two pairs of sliding surfaces $S_1$ and $S_2$.

Similarly, when the next outer pin link $B_1$ reaches the drive sprocket and moves along the pitch circle of the drive sprocket 6, its trailing end turns downward, as shown in Figure 4, about a leading pin, which is, in fact, the trailing pin 5b of the preceding inner roller link $A_1$, as a fulcrum. Since the outer link plates 4 making up the pin link B are fast with the pins 5, turning of the pin link $B_1$ with respect to the sprocket 6 produces sliding friction at the contact surfaces $S_3$ between the pin 5b and the bush 3b thereon only, and in this case no sliding friction occurs between the bush 3b and the roller 10b thereon, and thus so far as each pin link B is concerned there is only one pair of sliding surfaces $S_3$.

Thus, the number of pairs of sliding frictional surfaces differs as between the case when the inner roller link A turns and the case when the outer pin link B turns. When the roller link A turns, the number of pairs of sliding surfaces is increased by one, compared with turning of the pin link B, producing friction, and therefore heat, between the leading pin 5a and the bush 3a thereon and between the bush 3a and the roller 10a thereon. When the pin link B turns, sliding is produced only between the pin 5b and the bush 3b thereon, developing wear only on these components, and the heat generated by turning of the pin link B is not as much as generated by turning of the roller link A. Therefore, during use of the chain, there are developed alternate zones where the amounts of friction and heat are large and where they are smaller due to these differences in sliding characteristics, resultant wear over long usage results in elongation of the chain, and for chains on which lubricant is used, heat deterioration of the lubricant filling clearances between the components occurs, as does heat ageing of lubricant seal rings which further promotes wear.

So far problems arising with roller chains have been discussed, but similar problems arise with bush chains. Because the bushes of a bush chain engage directly with the teeth of the sprockets over which the chain runs, when the inner bush link turns, two pairs of surfaces between the pin and bush and between the bush and tooth flank faces become sliding surfaces, whereas when the outer pin link turns, only the pair of surfaces between the pin and bush become sliding surfaces.

French patent Specification No. 2.030.886 discloses a chain and sprocket transmission in which a chain comprising inner and outer links alternately connected in endless formation runs around a sprocket, in which the links differ in length from the tooth pitch of the sprocket, and in which there is a substantially straight line portion at the base of the space between each two adjacent teeth of the sprocket.

According to the present invention there is provided a chain and sprocket transmission in which a chain comprising inner and outer links alternately connected in endless formation runs around sprockets, in which each inner link and each outer link differs in length from the tooth pitch of the teeth of the sprockets and in which at the base of the space between each two adjacent teeth of each sprocket there is a substantially straight line portion; characterised in that the amount by which the links are longer or shorter than the tooth pitch of the sprocket teeth is in the range of 0.2% to 4% of the sprocket tooth pitch. Such a chain has improved service life and durability as compared with the chains described above with reference to Figures 2 to 4, and as compared with the disclosures of French Specification No. 2.030.886, since the sliding characteristics of the leading ends of the inner links of the roller links in a roller chain and of the bush links in a bush chain are lowered to practically the same level as the leading ends of the outer links (that is the trailing ends of the inner links), whereby wear and heat at each end of each inner link are practically equalized and the load characteristic of every link with respect to sliding friction is averaged.

For a better understanding of the invention and to show how the same may be carried into effect, reference will now be made, by way of example, to Figures 5 to 10 of the accompanying drawings in which:—

Figure 5 is a sectional side view showing portions of a roller chain engaged with sprockets over which the chain runs.

Figure 6 is a view showing part of Figure 5 on a larger scale,

Figures 7 and 8 are vector diagrams showing the relationship of forces occurring during chain-to-sprocket engagement,

Figure 9 is a view similar to Figure 5 but showing a bush chain, and

Figure 10 is a sectional plan view showing part of the bush chain and one sprocket of Figure 9.

The roller chain 20 shown in Figure 5 running around drive and driven sprockets 26, 27 has inner roller links C and outer pin links D. Each roller link C is formed by attaching inner roller link plates 21, 21 to each other by two bushes 22, 22 that are made fast with the plates 21. Each pin link D is formed by attaching outer pin link plates 23, 23 to each other by two pins 24, 24 that are made fast with the plates 23. During assembly each bush 22 is rotatably engaged over a corresponding pin 24, and each roller 25 is loosely engaged over the periphery of a corresponding bush 22. The roller chain 20 is installed over the drive sprocket 26 and the driven sprocket 27 to run normally in the direction indicated by arrow Y by rotary driving of the drive sprocket 26, thereby to rotate the driven sprocket 27. The drive sprocket 26 is of smaller diameter than the driven sprocket 27 so that the roller chain serves as a reduction drive-transmission member.

Each inner roller link C differs in pitch from each outer pin link D, in that the pitch length $P_L$ of each roller link C is longer than the pitch length $P_S$ of each pin link D. As the chain 20 as a whole is composed by linking into endless formation such links C alternating with such links D, the roller chain 20 formed is an unequal pitch-length chain, in which against the average standard pitch $P_0$ of the chain the pitch lengths $P_L$ of the roller links C and the pitch lengths $P_S$ of the pin links D are set as:

$$P_L = P_0 + \sigma$$

$$P_S = P_0 - \sigma$$

$$P_S < P_0 < P_L$$

Furthermore, a substantially straight line portion of length U is formed at the base 28a or 29a of the space between each two adjacent teeth 28 or 29 of the drive or the driven sprocket 26 or 27, the intervals between adjacent teeth 28 or 29 being increased by this length U of the straight line portion. In the above equations, $\sigma \leq U$.

The average standard pitch $P_0$ of the chain 20 is the same as the tooth pitch of the sprockets 26 and 27 and therefore the sum of the two pitch lengths $P_L$ and $P_S$ of two adjacent links C and D is the pitch length for two teeth 28 and 29 of the sprocket 26 or 27. As compared with the tooth pitch of the sprockets 26 and 27, the roller links C are of longer pitch length and the pin links D are of shorter pitch length.

When the chain 20 as just described moves in the direction of arrow Y (Figure 5), driven by the drive sprocket 26, the leading roller 25a of each roller link C comes into contact only with the base 28a of the space between two teeth 28 of the drive sprocket 26, as shown in Figure 6, there being a clearance between the roller 25a and the adjacent tooth flank face 28b, whereas the trailing roller 25b (which is the leading roller for the next pin link D) engages with the tooth flank face 28b (shown, in Figure 6, for the preceding pin link D). In other words, the roller 25a-to-sprocket 26 contact is a linear contact, whereas the roller 25b-to-sprocket 26 contact is a face-to-face contact.

As has already been described with reference to Figures 1 to 4, each roller 25a is at a position where two pairs of surfaces, the surfaces $S_4$ of the pin 24 and the bush 22 that are in contact, and the surfaces $S_5$ of the bush 22 and the roller 25 that are in contact, are sliding surfaces, whereas each roller 25b is at a position where there is only one pair of sliding surfaces, the surfaces $S_6$ of the pin 24 and the bush 22 which are in contact. When engaging with a tooth 28, each roller 25 is subjected to reaction force due to the chain tension from the sprocket 26. A reaction force $F_2$ (Figure 7) acts on the leading roller 25a of the roller link C, and a tension load $F_1$ acts on the leading roller 25b of the pin link D. Figures 7 and 8 are vector diagrams showing the relationship of forces when the contacts just discussed occur. In these Figures, $T_0$ is the chain tension load, $T_1$ is the allotted load one tooth before in the equilibrium of force of engagement, $F_1$ is the reaction where contact occurs with the tooth flank face, $F_2$ is the reaction where contact occurs at the base of the space between adjacent teeth, $\alpha$ is the engagement angle, and $\varphi$ is the tooth flank face pressure angle.

Because the roller 25a has only linear contact with the base 28a of the space between adjacent teeth, and because the chain tension loading at the tooth 28 is small, although sliding friction develops between the pin 24 and the bush 22, and between the bush 22 and the roller 25, this frictional force does not increase very much, since the frictional force is physically proportional to the contact depression load. Therefore, the amount of wear and the heat generated at the pin 24, bush 22 and roller 25 can be reduced as compared with conventional chains. On the other hand, at the roller 25b, although a larger load exists than at the roller 25a because of the face-to-face contact with the teeth, as sliding friction only occurs between the pin 24 and the bush 22, wear and heat resulting from this friction are practically the same as occur at the roller 25a. Thus the amount of wear and heat generated at each link-to-link connection in the chain is made substantially uniform.

So far conditions at the drive sprocket 26 have been considered. At the driven sprocket 27, where force to rotate the sprocket is transmitted to the sprocket 27 by the chain 20, it is the leading roller 25a of each roller link C that comes into face-to-face contact with the tooth flank face 29b of a tooth 29, and the leading roller 25b of each pin link D that comes into linear contact with the face 29a of the space between two adjacent teeth 29. Thus the load characteristic reverses as compared with what occurs at the drive sprocket 26 and at first sight it might, therefore, be assumed that uniformization of wear and heat generation is not achieved at the driven sprocket 27. However, since the driven sprocket 27 is of larger diameter than the drive sprocket 26, the pitch angle $\alpha_2$ of the driven sprocket 27 is smaller than the pitch angle $\alpha_1$ of the drive sprocket 26. Thus when each link C, D turns along the pitch circle of the driven sprocket 27, the lengths over which sliding produced by this turning occurs between the pin 24 and bush 22, and between the bush 22 and roller 25 are shorter than the equivalent lengths at the drive sprocket 26. The more the driven sprocket 27 is increased in diameter, the shorter become the lengths over which sliding occurs, and the more reduced are the rate of wear and heat generated at the driven sprocket 27.

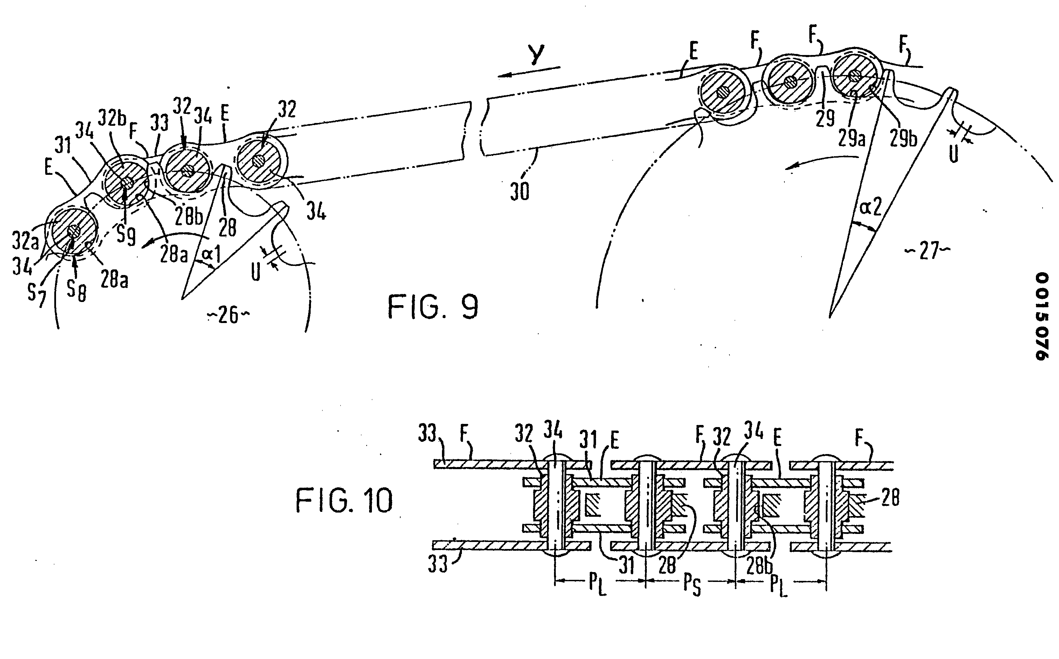

Figures 9 and 10 show a bush chain 30 embodying the invention. This bush chain 30 has inner bush links E formed by attaching bush link plates 31 and 31 to each other by pairs of bushes 32, 32, and outer pin links F formed by attaching pin link plates 33 and 33 to each other by pairs of pins 34, 34, each bush 32 being loosely engaged over a corresponding pin 34. As in the case of the roller chain 20, in this bush chain 30 the pitch length $P_L$ of each bush link E and the pitch length $P_S$ of each pin link F, and the average standard pitch $P_0$ of the chain 30 (the tooth pitch of the drive and driven sprockets 26 and 27 over which the chain runs) are set so that the following equations hold good:

$$P_L = P_0 + \sigma$$

$$P_S = P_0 - \sigma$$

$$P_S < P_0 < P_L$$

$$2P_0 = P_L + P_S.$$

The amount $\sigma$ by which the pitch length of the bush link E or pin link F is increased or decreased with reference to the average standard pitch $P_0$ is set as $\sigma \leqq U$ where U is the length of a substantially straight line portion formed at the base 28a or 29a of the space between each two adjacent teeth 28 or 29 of the sprocket 26 or 27.

In conventional bush chains, as no rollers are mounted on the bushes, the advantage of roller chains wherein there is rolling motion of the teeth flank faces is lost. Thus in conventional bush chains, as each link turns, the bushes slide directly on the teeth flank faces, leading to wear of both the bushes and the teeth flank faces.

In the present bush chain, in which the bush links E and the pin links F are of unequal pitch-length with the inner bush links E longer than the tooth pitch of the sprockets 26 and 27, and the outer pin links F shorter in length than this tooth pitch, and with each link differing in length from the tooth pitch by the same amount, when each bush 32a which is the leading bush of its bush link E with respect to the running direction (arrow Y in Figure 9) of the chain 30 comes into contact with the base 28a between two teeth 28, 28 of the drive sprocket 26 it is linear contact that occurs for the reasons already described. Also, for the reasons already described, face-to-face contact occurs between each tooth flank face 28b and each bush 32b which is the leading bush of its pin link F. Therefore, as described for the roller chain 20, for the bush chain 30 it is also possible to minimise wear and heat generation at each link-to-link connection where the contact surfaces $S_7$ between the pins 34 and the bushes 32, and the contact surfaces $S_8$ between the bushes 32 and the tooth flank faces 28a, are sliding surfaces, thereby to uniformize wear and heat generation with that occurring at the link-to-link connections where the contact surfaces $S_9$ between the pins 34 and the bushes 32 become sole sliding surfaces, and to minimise wear of the teeth flank faces.

As has been demonstrated above, by forming the chains described of links of unequal pitch-length, each differing from the tooth pitch by the same amount, it is possible to reduce the heat generated in the chain as a whole during running, thereby to minimise heat deterioration of lubricant filling clearances between the pins and bushes of the chain, and to minimise heat ageing of lubricant seal rings.

Furthermore, should the chain become dirty with mud, etc., and dirt penetrate between the bushes and the rollers in the case of a roller chain, then because at the leading end of each roller link sliding with respect to the sprocket teeth flank faces does not occur, the effect of grinding by mud is minimised to maximise service life and durability. In the case of a bush chain, the clearances ensured between the leading bushes and the sprocket teeth flank faces enable the effect of mud and the like to be minimised. In addition, as the contact area of the chain as a whole with respect to the sprockets is minimised, noise and vibration are also minimised.

In order to form unequal pitch-length chains as described, it is sufficient to change the hole pitch dimensions of conventional link plates, and, therefore, manufacture is simple.

As a result of a practical test conducted with a chain embodying the invention installed over sprockets, it has been established that for good results the amount 6 for the inner links (roller links in the case of a roller chain and bush links in the case of a bush chain) and for the outer links (pin links in the case of both a roller chain and a bush chain) by which the length of each link is increased or decreased above or below the average standard pitch $P_0$ should be set in the range of 0.2% to 4% of the average standard pitch (or sprocket tooth pitch) $P_0$.

This invention is applicable to types of chains other than roller chains and bush chains.

## Claims

1. A chain and sprocket transmission in which a chain comprising inner and outer links alternately connected in endless formation runs around sprockets, in which each inner link (C, E) and each outer link (D, F) differs in length from the tooth pitch ($P_0$) of the teeth (28, 29) of the sprockets (26, 27) and in which at the base (28a, 29a) of the space between each two adjacent teeth (28, 29) of each sprocket (26, 27) there is a substantially straight line portion; characterised in that the amount by which the links (C, E, D and F) are longer or shorter than the tooth pitch ($P_0$) of the sprocket teeth (28, 29) is in the range of 0.2% to 4% of the sprocket tooth pitch ($P_0$).

2. A chain and sprocket transmission as claimed in claim 1, in which the sprockets are a drive sprocket (26) and a driven sprocket (27), and in which the diameter of the driven sprocket (27) is greater than that of the drive sprocket (26).

## Revendications

1. Transmission à chaîne et roues dentées, dans laquelle une chaîne comprenant des mailons intérieurs et extérieurs alternativement assemblés en une conformation sans fin passe autour de roues dentées, dans laquelle chaque maillon intérieur (C, E) et chaque maillon extérieur (D, F) diffère en longuer du pas ($P_0$) des dents (28, 29) des roues dentées (26, 27) et dans laquelle, à la base (28a, 29a) de l'espace entre deux dents voisines (28, 29) de chaque roue dentée (26, 27) se trouve une partie sensiblement rectiligne, caractérisée en ce que la valeur dont les maillons (C, E, D et F) sont plus longs ou plus courts que le pas ($P_0$) des dents (28, 29) des roues dentées se situe dans la plage de 0,2 pour cent à 4 pour cent du pas des dents des roues dentées ($P_0$).

2. Transmission à chaîne et roues dentées selon la revendication 1, dans laquelle les roues dentées sont une roue dentée motrice (26) et une roue dentée menée (27), et dans laquelle le diamètre de la roue dentée menée (27) est plus grand que celui de la roue dentée motrice (26).

## Patentansprüche

1. Ketten- und Kettenrad-Übersetzung, in welcher eine, in endloser Anordnung alternierend miteinander verbundene innere und äußere Kettenglieder aufweisende Kette über Kettenräder läuft, wobei jedes innere Kettenglied (C, E) und jedes äußere Kettenglied (D, F) in seiner Länge vom Zahnabstand ($P_0$) der Zähne (28, 29) der Kettenräder (26, 27) verschieden ist und an der Basis (28a, 29a) des Abstandes zwischen zwei benachbarten Zähnen (28, 29) eines jeden Kettenrades (26, 27) ein im wesentlichen geradliniger Abschnitt vorhanden ist, dadurch gekennzeichnet, daß der Betrag, um welchen die Kettenglieder (C, E, D und F) länger oder kürzer als der Zahnabstand ($P_0$) der Kettenradzähne (28, 29) ist, im Bereiche von 0,2 % bis 4 % des Kettenradzahnabstandes ($P_0$) liegt.

2. Ketten- und Kettenrad-Übersetzung nach Anspruch 1, in welcher die Kettenräder ein Antriebskettenrad (26) und ein angetriebenes Kettenrad (27) sind und in welcher der Durchmesser des angetriebenen Kettenrades (27) größer ist als jener des Antriebskettenrades (26).

FIG. 1

FIG. 2

FIG. 6

FIG. 3

FIG. 4

2

FIG. 5

FIG. 7

FIG. 8

FIG. 9

FIG. 10